# EUROPEAN PATENT APPLICATION

(11) **EP 2 808 268 A1**
(43) Date of publication of application: **03.12.2014**
(21) Application number: 14170601.0
(22) Date of filing: 30.05.2014
(51) Int. Cl.: B65D 81/20, B65D 88/16, B65B 55/00, B65B 31/04, B65B 57/00

(54) **Equipment to treat bulk products, flexible container or bag for bulk products and process for treating bulk products by such equipment**

(30) Priority: 30.05.2013 ES 201330674 U
(71) Applicant: Aguilar Monforte, Carlos, 08480 L'Ametlla del Vallès (ES)
(72) Inventor: Aguilar Monforte, Carlos, 08480 L'Ametlla del Vallès (ES)
(74) Representative: Oficina Ponti, SLP

(57) **Abstract**

Equipment (1) for the treatment of goods traded wholesale, which comprises a bag or container (2) made of flexible material destined to contact directly with said goods and a device (3) for injecting and/or extracting gas from the interior volume of said container (2), once said goods have been packed, said bag or container (2) including at least a valve (4,5) through which said gas injection and/or extraction is carried out, said bag or container (2) comprising at least a layer made of flexible material with a permeability suitable for keeping substantially constant the composition of the container inner atmosphere (2) for a determined time, once said gas injection and/or extraction is carried out.

## Description

The present invention relates to an equipment for commercialising and storing wholesale goods, to a container or bag made of flexible material for commercialising wholesale goods that can be treated with said equipment, and to a process for the treatment of the wholesale goods which uses said equipment.

### Background of the invention

Nowadays, in the industrial sector it is common to use flexible packaging material with medium and high capacities (such as the containers "big bag" or "octabin", collapsible containers, liners for shipping containers, etc), to transport and market wholesale goods. These containers are used to replace the rigid and traditional, metal or plastic drums or containers.

The use of packaging or container of flexible material has enabled significant cost savings associated with the purchase and management of packaging of goods traded wholesale. Flexible packaging materials are cheaper than rigid plastic or metal material containers, take up little space and also are single-use, so that the reusing costs of the rigid ones are eliminated (cleaning, transportation, etc...)

In addition, said flexible material packaging can be provided with high protective inner sleeves (commonly called "liners"). These sleeves include layers of barrier materials to moisture and oxygen or gas transmission and a seal which guarantees the stability of the oxidizable and / or hygroscopic products contained therein.

The development of flexible packaging or containers with medium and high capacities provided with barrier material sleeves has enabled certain industrial sectors, dealing with sensitive products, to benefit from the many advantages offered by the flexible packaging of a single use in industrial packaging of goods.

However, the use of flexible packaging or containers for single use is still very limited in sectors such as food, chemical and pharmaceuticals, which regulations concerning the processing and storage of products are becoming more demanding.

### Description of the invention

The aim of the present invention is to develop an equipment for treating goods sold wholesale having the advantages described below.

With this object, according to a first aspect, the present invention provides for an equipment for the treatment of wholesale goods which is characterised in that it comprises a bag or container made of flexible material destined to contact directly said goods and a device for injecting and/or extracting gas from the interior volume of said container, once said goods have been packed, said container or bag including at least a valve through which said gas injection and/or extraction is carried out, said container or bag comprising at least a layer or sheet made of flexible material with a permeability suitable for keeping the composition of the container inner atmosphere substantially constant for a predetermined time, once said gas injection and/or extraction has been carried out.

The proposed equipment has the advantage that it ensures optimal storage conditions and preservation of goods in the pharmaceutical, chemical and food industry, in a very simple way, providing inside the container, once the goods packaged, an atmosphere that facilitates the conservation and ensures inert conditions.

The equipment of the present invention can be incorporated into any area of the filling line and packaging industry, as the equipment treats the goods once it has been packaged, through the valve incorporated in the container or bag itself. As a result, users of this equipment may use traditional filling and packaging systems without modification.

Another advantage of the equipment lies in the fact that it allows to choose the point of entry and exit of gas from the package by placing one or more valves at different points, depending on the size and density of the packed product. As a result, it is much easier to ensure the uniform application of gas inside the container. Furthermore, it has been found that with the proposed equipment it is easier to control the composition of the atmosphere inside the container, since, before performing the injection, the air or gas present can be removed totally or partially.

According to a second aspect, the present invention provides for a bag or container made of flexible material for commercialising wholesale goods that can be treated with the mentioned equipment, which is characterised in that it incorporates at least a valve configured for carrying out the gas injection and/or extraction with said equipment. Preferably, this flexible bag or container is single use.

In an embodiment, the container is a bag which includes a plurality of layers or sheets made of flexible material and one or more filling inlets. This bag can be a "liner" or interior sleeve for containers of wholesale goods, for example, a "liner" or interior sleeve with a capacity equal or greater than 200 Kg. This sleeve or "liner" can be later fixed to a flexible or rigid support structure.

Advantageously, this sleeve or "liner" of the container or bag includes at least a layer or sheet made of flexible material with a permeability suitable for keeping substantially constant, for a predetermined time period, the composition of the container inner atmosphere.

Preferably, this layer made of flexible material has a low permeability to oxygen and/or the moisture. For example, the permeability levels can be in the following ranges;
- permeability to water vapor: between 10 g/m² and 0,01 g/m² and 24 h
- permeability to oxygen; between 150 ml/m² and 0,01 ml/m² and 24 h

Even more preferably, the sleeve or "liner" includes a layer or sheet made of flexible material, as for example, a polyethylene sheet, which allows for tightly closing the container by heat sealing. This type of tight closure is very comfortable and safe. However, there exist other types of tight closures, as for example, closures by strangulation of a conduit coupled to the filling inlet of the container.

Advantageously, in the cases where the goods are hygroscopic, the container or bag includes a layer made of flexible material which comprises an aluminium sheet.

More advantageously, in the cases wherein the good comprises sharp edges, said container or bag includes a layer made of flexible material which comprises a polyamide sheet. This material has high mechanical strength at break.

In a preferred embodiment, the valve which incorporates the container or bag includes a needle of gas injection and/or extraction which is sized to reach the central section of the container when said container is full for ensuring the loading or extraction of gas from said central section, said needle extending from a seat provided in the flexible wall of said container or bag. This valve with needle has already been fixed to the wall of the container or bag when the good is introduced therein.

Advantageously, said needle is arranged near the base of the container for ensuring the loading of gas from the lower central section.

It has been found that when the commodity is a compact product or a powder form product (eg, flour), the injected gas penetrates with difficulty and very slowly in the good placed in the center section of the package. This makes the treatment slow and hinders the implementation of uniformity of gas and the obtaining of homogeneous samples, and then the real-time analysis of the composition of the atmosphere inside the container may be not completely reliable. This lack of control can spoil the goods when it comes to sensitive products such as the pharmaceutical or food industry.

According to the aforementioned preferred embodiment, the loading or extraction of gas is carried out from the central section through a valve arranged in the flexible wall of the container or bag. This valve incorporates a needle sized for penetrating up to said central section. In such a way, the application of the gas is uniform, the obtaining of samples is fast and the reading of the composition of the container inner atmosphere is reliable, thus ensuring the strict conditions required by the pharmaceutical and food industries.

Advantageously, the needle of injection and/or extraction of the valve comprises a conduit provided with a plurality of holes for easing the gas injection and/or extraction in a distributed manner in the whole central volume of the container. This conduit can be made for example of rigid plastics.

More advantageously, said conduit of the valve needle has a diameter equal or lower than 20 mm and a length greater than 300 mm. This conduit is fixedly integrated inside the flexible container or bag when it is empty. When the flexible container is full of goods, the rigid conduit is arranged such that its end penetrates up to the central section of the container itself.

In an embodiment, in summary, the equipment of the present invention incorporates;
- an air extraction unit for providing a determined void level inside said container,
- a gas injection unit for providing a determined gas concentration inside the container itself, once the air extracted, said unit including means for controlling the interior pressure of the container,
- a unit for analysing the composition of the inner atmosphere of said container,
- an automatic processing and control unit of the device of gas injection and/or extraction which is configured for adjusting in real-time the air and gas extraction and/or injection levels as a function of predetermined parameters, or as a function of the composition of the atmosphere, to obtain the correct modification of the container inner atmosphere, and
- a bag or container made of flexible material which incorporates at least a first valve through which is carried out the air extraction, and at least a second valve through which the gas injection is carried out.

Advantageously, the valve which incorporates the container or bag, and in particular, this second valve of injection, includes a needle or conduit of gas injection and/or extraction which is sized for penetrating up to the central section of the container when said container is full for ensuring the loading of gas from said central section.

Preferably, the air extraction unit includes a compressor and an air aspiration conduit which includes a connecting element provided with an elastic material capable of adhering, by way of suction, to the external surface of a vacuum valve. This vacuum valve further includes, a seat provided with a filter for filtering the extracted air.

Even more preferably, the injection unit includes a gas pump and an injection conduit provided with a connecting element which can be coupled to a second valve.

As regards the analysis unit, it should be noted that the analysis can be performed on a sample of atmosphere obtained through the same valve which is built-in the container or bag.

Advantageously, said gas injection and air extraction units are arranged in a frame which is configured for being coupled in a removable manner to a filling and packaging line. As a result, an equipment of highly versatile treatment is obtained.

According to a third aspect, the present invention also relates to a process for the treatment of wholesale goods previously packaged in a container made of flexible material or bag which contacts directly said goods. This process includes the steps consisting in;
a) applying total or partial vacuum to the interior volume of the container or bag tightly closed, once this container is full, extracting air through a valve until a determined void level has been reached,
b) injecting gas through a valve built-in the container or bag itself, said valve including, preferably, a needle of gas injection which is sized for penetrating up to the central section of the container when said container is full for ensuring the loading of gas from said central section,
c) while the gas injection is being carried out, obtaining a sample and analysing in real-time the composition of air or gas of the interior of the container,
d) if the composition is not the predetermined one, going on with the injection and, otherwise, stop the injection and close the valves.

Preferably, the sample of step c) is obtained through the vacuum or extraction of air valve.

The packaging of the good is carried out in a container flexible or bag which already incorporates the valve with needle for the injection or extraction of gas.

The equipment and process of the present invention are well suited to ensure an effective and reliable inert condition of the goods in the pharmaceutical, food and chemical industries that are packaged in flexible packaging for single use.

In the present invention, by extraction and / or injection of gas it is meant extraction and / or injection of any type of gas or mixture of gases inside the container. The injected gas can be, for example, air. In any case, the injection and / or extraction of gas or air, is conducted to obtain a modified atmosphere inside the container which ensures the preservation of goods. Eventually, the injected gas can also be used to perform a treatment to the goods, for example, this treatment may serve to eliminate pests or insects.

### Brief description of the figures

For a better understanding of what has been outlined, some drawings are attached in which, schematically and solely by way of non-limiting example, a practical case of embodiment is depicted.
Figure 1 shows a schematic view of an equipment of the present invention arranged in a frame which is capable of being coupled in a fixed or mobile manner to a filling and packaging line of goods.
Figure 2 is a detail of Figure 1 showing the container and the valves.
Figure 3 is a detail of the vacuum valve in Figure 1.
Figure 4 shows a section of a valve including the needle of gas injection and/or extraction or air.
Figure 5 shows a perspective view of the valve of Figure 4.
Figure 6 is a schematic representation of an embodiment of the container of flexible material which incorporates a first air extraction valve and a second valve provided with a gas injection needle.

### Description of a Preferred Embodiment

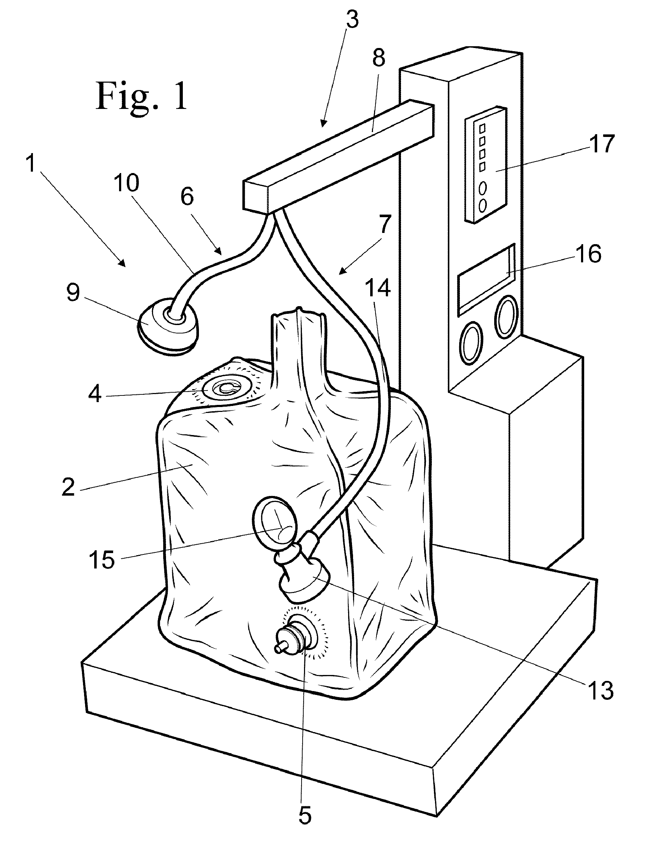

An embodiment of the apparatus of the present invention will be described below with reference to Figures 1 to 3.

Fig. 1 shows an equipment 1 of the present invention which comprises a container 2 made of flexible material and a device 3 for injection and extraction of gas from the interior volume of said container 2.

In the embodiment shown, the container 2 incorporates two valves 4, 5 through which the air extraction and the gas injection are carried out, by means of an air extraction unit 6 and a gas injection unit 7 arranged in a frame 8 of the device 3. This frame 8 may be coupled in a removable manner in any part of the filling or packaging line of goods of an industry.

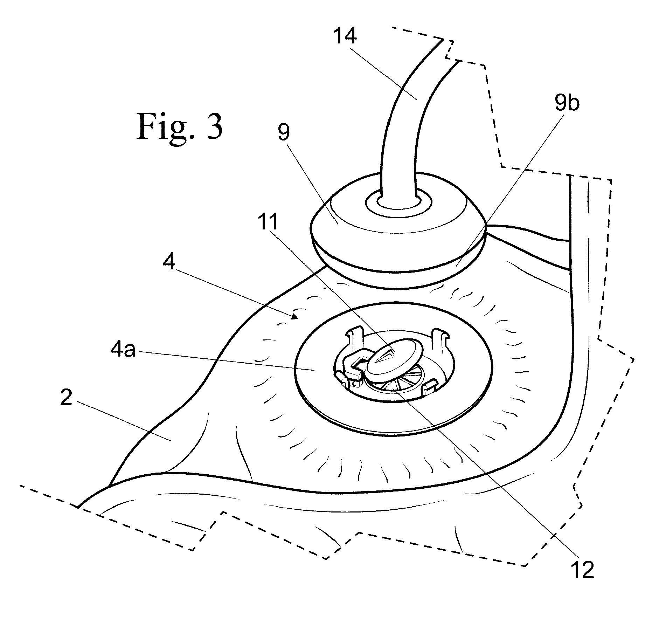

As it can be seen in Fig. 3, the air extraction valve 4 includes a flat external surface 4a which is configured for receiving the elastic material 9b of a connection element 9 which, by way of suction, adheres to this surface 4a when extracting air through said valve 4. The connection element 9 is arranged in the end of a suction conduit 10 which is part of the air extraction unit 6. The valve 4 itself includes a cover 11 capable of pivoting for allowing the air going out through a hole 12, when activating a compressor (not shown). This cover 11 closes when stopping the aspiration and can be locked to prevent opening it by means of an additional cover (not shown) which engages it.

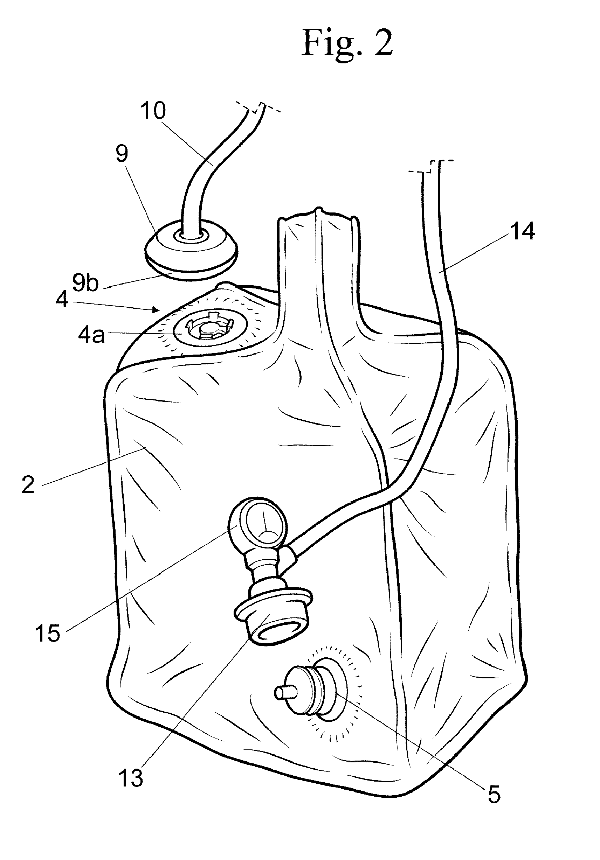

In the embodiment shown, the valve 5 of gas injection has been arranged in a lower position than the air extraction valve 4 for ensuring the uniform application of gas in the whole interior volume of the container 2. As it can be seen in figures 1 and 2, the valve 5 is configured for allowing it to be coupled to a connecting element 13 which is arranged in the end of a gas pumping conduit 14 which is part of the injection unit 7 of the device 3. This connecting element 13 includes a manometer 15 for measuring the pressure of gas injected by a pump (not shown).

Besides the gas injection and air extraction units 6, 7, the device 3 includes a unit 16 for analysing the composition of the container inner atmosphere 2 and a processing and control unit 17 for modifying in real-time the injection and extraction of gas as a function of the composition of the container inner atmosphere 2.

As it can be seen in figures 1 and 2, the container 2 is configured as a bag made of flexible material. Specifically, the container 2 shown is a interior sleeve or "liner" for commercialising wholesale goods which includes a plurality of layers or sheets made of flexible material and, in this case, only an inlet. One of said sheets has a permeability suitable for keeping substantially constant for a predetermined time the composition of the container inner atmosphere 2, once the gas injected and the valves 4, 5 closed. This interior sleeve or "liner" directly contacts the good and can be coupled to a flexible or rigid container.

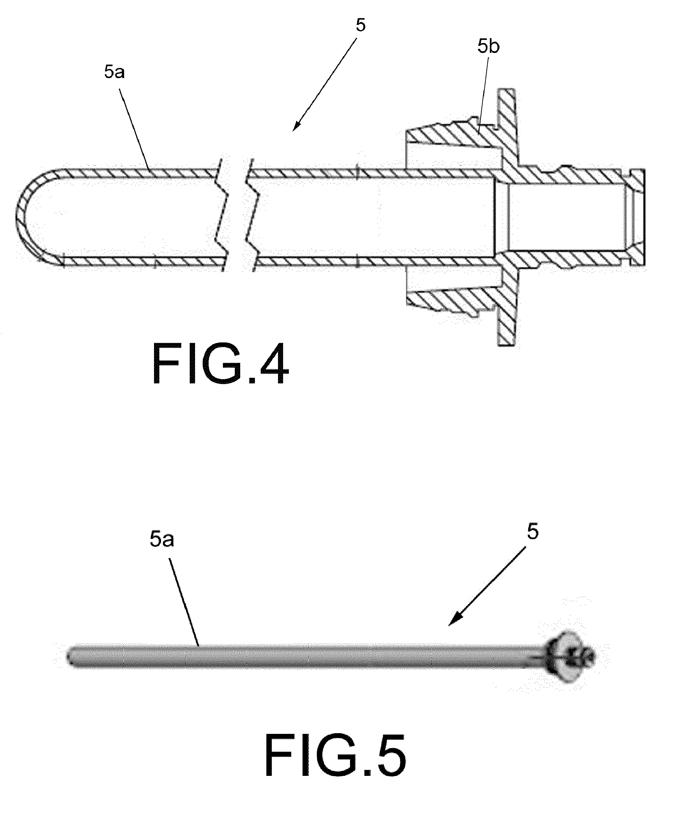

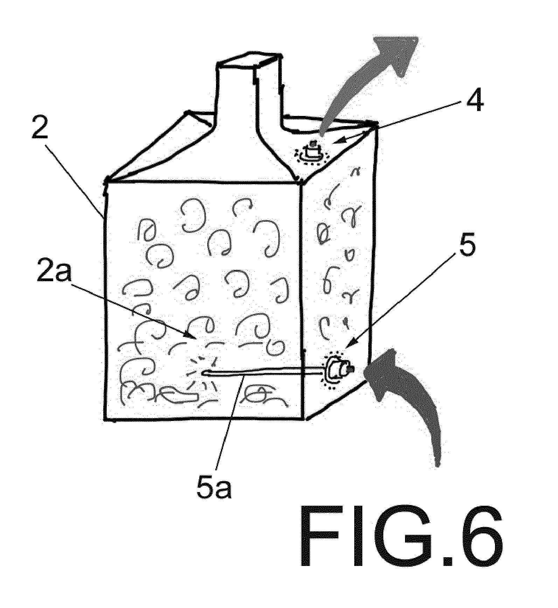

Figs 4 and 5 show a longitudinal section and a perspective view of an embodiment of the injection valve 5 which includes a needle or conduit 5a extending from the seat 5b of the valve 5 and are sized for penetrating up to the central section 2a of the container 2 when the container 2 is full. In this way, the loading of gas from said section central 2a is ensured and along with it the uniform distribution of the gas in the whole volume of the container 2 (see fig. 6). Thanks to that, the obtaining of samples is quick and the reading of the composition of the container inner atmosphere is reliable, thus ensuring the strict conditions demanded by the pharmaceutical and food sectors.

In the embodiment shown, the needle or conduit 5a of the valve 5 is made from rigid plastics and has a diameter of 12 mm and a length of 500 mm suitable for penetrating up to the central section 2a of a container 2 with a goods capacity greater than 200 Kg. The end of the needle or conduit 5a has holes for easing the exit of the gas.

Now, the operation of the equipment 1 and the goods treating process with said equipment 1 will be described.

As already mentioned, the goods are previously packaged in a conventional filling and packaging line, for the tight closure of the container 2 by thermal sealing applied to the polyethylene sheets of the material of the container 2.

Once the container 2 has been tightly closed with the goods inside, the air is extracted from the interior volume of the container 2 by means of the air extraction unit 6 of the device 3, by applying the connection element 9 of the suction conduit 10 on the flat surface 4a of the valve 4. The vacuum is carried out through the valve 4 until a determined vacuum level is reached. The seat of the valve 4 incorporates a filter (not shown) for filtering the extracted air.

Then, once the connecting element 13 of the gas pumping conduit 14 is coupled to the valve 5, the gas injection in the interior volume of the container 2 is carried out.

Both the gas injection and the air extraction are carried out under the supervision of the processing and control unit 17 which receives the information coming from the real-time analysis unit 18 of the container inner atmosphere 2. This analysis is carried out over a sample of gas obtained directly through the air extraction valve 4 or of the injection valve 5.

Once the processing and control unit 17 has checked that the concentration of the atmosphere is the desired one, the injection is stopped and then the valves 4,5 are closed.

Fig. 6 shows schematically the steps consisting in extraction of air and gas injection in a bag or container 2 which includes an upper first valve 4 of extraction of air and a second valve 5 of gas injection which is in a lower position. As shown in Fig. 6, the second valve 5 includes a needle or conduit 5a sized for penetrating up to the lower central section 2a of the container 2. In such a way, a fast and uniform loading of gas is ensured in the whole volume of the container 2, thus avoiding erroneous readings of the composition of the container inner atmosphere 2, above all in powdery goods.

As already mentioned in the description of the invention, the claimed equipment 1 allows for treating the goods previously packaged ensuring conservation and storing conditions which satisfy the demanding regulations of the pharmaceutical, chemical and agrifood industries. Thanks to this, the industries will benefit from the use of the flexible packages 2 for easing the transport and storing of wholesale goods.

Although it has been made reference to a specific embodiment of the invention, it will be apparent to one skilled in the art that the equipment described is susceptible of numerous variations and modifications, and that all the details mentioned can be replaced by other technically equivalent, without departing from the scope of protection defined by the appended claims. For example, although described in Figures 1 with an equipment bag or container 2 having a single filler and two valves 4,5, the same equipment may work with a bag or container with two filling and / or emptying ports and a single valve.

## Claims

1. Equipment (1) for the treatment of goods traded wholesale, **characterized in that** it comprises a bag or container (2) made of flexible material destined to contact directly said goods and a device (3) for injecting and/or extracting gas from the interior volume of said container (2), once said goods have been packed, said bag or container (2) including at least a valve (4,5) through which said gas injection and/or extraction is carried out, said bag or container (2) comprising at least a layer made of flexible material with a permeability suitable for keeping the composition of the container inner atmosphere (2) substantially constant for a determined time, once said gas injection and/or extraction has been carried out.

2. Equipment (1) according to claim 1, wherein said device (3) includes an air extraction unit (6) for providing a determined void level inside said container (2), a gas injection unit (7) for providing a determined gas concentration inside the container itself (2), once said air has been extracted, and at least a valve (4,5) incorporated in the container (2) through which said air extraction and said gas injection are carried out.

3. Equipment (1) according to claim 2, wherein said bag or container (2) incorporates at least a first (4) valve through which the air extraction is carried out, and at least a second (5) valve through which the gas injection is carried out.

4. Equipment (1) according to claim 3, wherein said second valve (5) includes a gas injection and/or extraction needle (5a) which is sized for penetrating up to the central section (2a) of the bag or container (2) when said bag or container (2) is full, said needle (5a) extending up to said central section (2a) starting from a seat (5b) of the valve (5) which is joined to the wall of said bag or container (2).

5. Equipment (1) according to any of claims 1 to 4, wherein said device (3) for injecting and/or extracting gas includes a unit (16) for analysing the composition of the inner atmosphere of said container (2), said analysis being capable of being carried out in an atmosphere sample obtained through said same valve itself (4,5).

6. Equipment (1) according to any of claims 1 a 5, which comprises a control unit (17) of said device of gas injection and/or extraction, said processing and control unit (17) being configured for adjusting in real-time the air and gas extraction and/or inyection levels as a function of predetermined parameters, or as a function of the composition of said atmosphere, to obtain the correct modification of the container inner atmosphere.

7. Equipment (1) according to claim 2, wherein said air extraction unit (6) includes a compressor and an air aspiration conduit (10) which includes a connecting element (9) provided with as elastic material (9b) capable of adhering, by way of suction, to the external surface (4a) of the air extraction valve (4).

8. Equipment (1) according to claim 2, wherein said injection unit (7) includes a gas pump and an injection conduit (14) provided with a connecting element which can be coupled to said second valve (5).

9. Equipment (1) according to any of claims 2 to 8, wherein said gas injection and air extraction units (6,7) are arranged in a frame (8) which is configured for being coupled removable to a filling line.

10. Container (2) made of flexible material or bag for commercialising wholesale goods that can be treated with the equipment (1) according to claims 1 to 9, **characterized in that** it incorporates at least a valve (5) configured for carrying out the gas injection and/or extraction with said equipment (1).

11. Container (2) or bag according to claim 10, wherein said valve (5) includes a needle (5) of gas injection and/or extraction extending from a seat (5b) foresee in the wall of said bag or container (2), said needle (5a) being sized for reaching the central section (2a) of the bag or the container (2) when the bag or the container (2) is full for ensuring the loading or extraction of gas from said central section (2a).

12. Container (2) or bag according to claim 11, wherein said needle of injection and/or extraction of the valve (5) comprises a conduit (5a) provided with a plurality of holes for easing the gas injection and/or extraction.

13. Container (2) or bag according to any of claims 11 or 12, wherein said needle or conduit (5a) has a diameter equal or inferior to 0,02 m (20mm) and a length greater than 0,30 m (300 mm).

14. Container (2) or bag according to any of claims 10 a 13, wherein said container or bag has a capacity equal or greater than 200 Kg of good, and said valve (5) is built-in the wall of said bag (2) or container.

15. Process for the treatment of goods traded wholesale with the equipment (1) and the bag or the container (2) according to claims 1 a 14, which comprises the steps consisting in;
a. apply vacuum in the interior volume of the bag or container (2) tightly closed, once the bag or container (2) is full, extracting air through a valve (4) until reaching a determined vacuum level,
b. injecting gas through a valve (5) which is built-in the bag or container (2) itself, said valve (5) including, preferably, a gas injection needle (5a) which is sized for penetrating up to the central section (2a) of the bag or container (2) when said bag or container (2) is full, for ensuring the loading of gas from said central section (2a),
c. as the gas injection is being carried out, obtaining a sample and analysing in real-time, the composition of air or gas of the interior of the bag or container (2),
d. if the composition is not the predetermined one, going on with the injection and, otherwise, stop the injection and close the valves (4,5).
